# EUROPEAN PATENT APPLICATION

(11) **EP 4 411 333 A1**
(43) Date of publication of application: **07.08.2024**
(21) Application number: 22875719.1
(22) Date of filing: 02.09.2022
(51) Int. Cl.: G01M 3/24, B64C 27/08, B64C 39/02, B64D 47/08

(54) **SOUND WAVE RECEPTION DEVICE, SOUND SOURCE BEARING STANDARDIZATION DEVICE, AND METHOD FOR STANDARDIZING SOUND SOURCE BEARING**

(30) Priority: 30.09.2021 JP 2021161253
(71) Applicant: JFE Advantech Co. Ltd., Nishinomiya-shi, Hyogo 663-8202 (JP); JFE Steel Corporation, Tokyo 100-0011 (JP)
(72) Inventor: OKA Tomomichi, Nishinomiya-shi, Hyogo 663-8202 (JP); ODA Masahiro, Nishinomiya-shi, Hyogo 663-8202 (JP); KUSHIDA Yasuo, Nishinomiya-shi, Hyogo 663-8202 (JP); ISHIYAMA Kazuyo, Tokyo 100-0011 (JP); MATSUI Yutaka, Tokyo 100-0011 (JP)
(74) Representative: Hoffmann Eitle
(86) International application number: PCT/JP2022/033113
(87) International publication number: WO 2023/053847

(57) **Abstract**

To provide a sound wave receiving device, a device for determining sound source direction, and a method for determining sound source direction capable of accurately determining the direction of a sound source while suppressing the influence of sound wave noise generated by rotor blades of an aerial vehicle and external sounds which are reflections of the sound wave noise on surrounding structures.

A sound wave receiving device 5 includes: an aerial vehicle 10 having rotor blades 12; an array sensor 21 mounted on the aerial vehicle 10 and including a plurality of microphones 21a; a first shielding member 40 installed between the rotor blades 12 and the array sensor 21, and suppressing an influence of sound wave noise generated by the rotor blades 12 on a sound wave received by the array sensor 21; and a second shielding member 50 provided along a peripheral portion of the array sensor 21, and suppressing reception by the array sensor 21 of external sound from outside a sound wave reception range set in advance for the sound wave.

## Description

### Technical Field

The present invention relates to a sound wave receiving device, a device for determining sound source direction, and a method for determining sound source direction in which microphones that receive sound waves generated from a sound source are mounted on an aerial vehicle.

### Background Art

Hitherto, regular inspection of piping has been conducted to prevent fires and human accidents caused by gas leakage from gas piping installed on a factory site. Inspection of piping installed at high places, such as overhead piping, requires installation of scaffolding, which is time-consuming and costly. In addition, the gas itself may contain harmful substances and the worker may not be able to approach.

Various methods have been proposed for detecting gas leakage. For example, an acoustic method of identifying a leakage location by detecting, with the use of an array sensor including a plurality of microphones, sound waves emitted simultaneously in response to gas leakage, and displaying the leakage location as a map of sound pressure (see, for example, Patent Literature 1 and 2), a method using laser light (see, for example, Patent Literature 3), and a method using an infrared camera (see, for example, Patent Literature 4) are known. Among them, laser detectors and infrared-camera detectors are used by separately using the wavelength range of light handled according to the type of gas to be targeted.

Multiple types of gas are managed at a steel mill. For example, the components of blast furnace gas (sometimes referred to as B gas) and converter gas (sometimes referred to as LD gas) include hydrogen, oxygen, argon, nitrogen, carbon monoxide, carbon dioxide, and the like, and the components of coke oven gas (sometimes referred to as C gas) include methane and hydrocarbons in addition to the above components. Moreover, the components of city gas include methane, ethane, propane, butane, and the like, and there is also piping for hydrogen and oxygen. Therefore, it is preferable at a steel mill to use an acoustic system that can detect leakage without being limited by gas components.

In recent years, an unmanned aerial vehicle or the so-called multicopter with multiple rotor blades has been used for equipment inspection, and it has been proposed to remotely detect defects such as cracks and corrosion in structures based on images captured with a camera mounted on the unmanned aerial vehicle. Furthermore, a method of mounting an array sensor on an unmanned aerial vehicle and determining the direction of a sound source has been proposed (see Patent Literature 5).

### Citation List

### Patent Literature

PTL 1: Japanese Unexamined Patent Application Publication No. 2019-203742
PTL 2: International Publication No. 2018/056214
PTL 3: Japanese Unexamined Patent Application Publication No. 2018-169386
PTL 4: Japanese Unexamined Patent Application Publication No. 2008-532386
PTL 5: U.S. Unexamined Patent Application Publication No. 2019/0033422

### Summary of Invention

### Technical Problem

However, as in Patent Literature 5, when an unmanned aerial vehicle equipped with rotor blades is mounted with an array sensor to determine the direction of a sound source, the measurement of sound waves generated from the sound source may be hindered by the influence of sound waves generated from the rotor blades in flight.

The present invention has been made to solve such problems, and it is an object thereof to provide a sound wave receiving device, a device for determining sound source direction, and a method for determining sound source direction capable of accurately determining the direction of a sound source while suppressing the influence of sound wave noise generated by rotor blades of an aerial vehicle and external sounds which are reflections of the sound wave noise on surrounding structures.

### Solution to Problem

[1] A sound wave receiving device including: an aerial vehicle having a rotor blade; an array sensor mounted on the aerial vehicle and including a plurality of microphones; a first shielding member installed between the rotor blade and the array sensor, and suppressing an influence of sound wave noise generated by the rotor blade on a sound wave received by the array sensor; and a second shielding member provided along a peripheral portion of the array sensor, and suppressing reception by the array sensor of external sound from outside a sound wave reception range set in advance for the sound wave.
[2] The sound wave receiving device according to [1] described above, wherein the first shielding member includes a first sound-absorbing material having a sound-absorbing property and a first sound-insulating material having a sound-insulating property, and the first sound-absorbing material is disposed closer to the array sensor than the first sound-insulating material.
[3] The sound wave receiving device according to [1] or [2] described above, wherein the second shielding member includes a second sound-absorbing material having a sound-absorbing property and a second sound-insulating material having a sound-insulating property, and the second sound-absorbing material is disposed closer to the array sensor than the second sound-insulating material.
[4] The sound wave receiving device according to any one of [1] to [3] described above, wherein the first shielding member and the second shielding member are integrally configured with each other.
[5] The sound wave receiving device according to any one of [1] to [4] described above, wherein the array sensor is mounted at a same height as or below the rotor blade in a vertical direction of the aerial vehicle, and is installed so that an angle of a lower part of the sound wave reception range in a depression angle direction with respect to a reference plane including the rotor blade is 50° or less.
[6] The sound wave receiving device according to any one of [1] to [4] described above, wherein the array sensor is mounted at a same height as or above the rotor blade in a vertical direction of the aerial vehicle, and is installed so that an angle of an upper part of the sound wave reception range in an elevation angle direction with respect to a reference plane including the rotor blade is 50° or less.
[7] The sound wave receiving device according to any one of [1] to [6] described above, wherein the first shielding member has a length of 80% or more of a distance from the array sensor to a tip of the rotor blade.
[8] The sound wave receiving device according to any one of [1] to [7] described above, wherein the aerial vehicle has a plurality of the rotor blades; the array sensor is disposed between two adjacent rotor blades; and, let a maximum distance [mm] between the array sensor and a tip of the rotor blades in a direction of the sound wave reception range be A, and a horizontal sound wave reception range angle (°) of the array sensor be θ, then, a width of the first shielding member at 80% of the maximum distance A is 2 × (0.8 × A) × tan(θ/2) [mm] or more.
[9] The sound wave receiving device according to any one of [1] to [5], [7], and [8] described above, wherein both ends of the first shielding member are positioned below the array sensor in a width direction of the aerial vehicle.
[10] The sound wave receiving device according to any one of [1] to [4] and [6] to [8] described above, wherein both ends of the first shielding member are positioned above the array sensor in a width direction of the aerial vehicle.
[11] A device for determining sound source direction including: the sound wave receiving device according to any one of [1] to [10] described above; and a computing unit that calculates a sound pressure in each of directions of arrival of the sound wave based on the sound wave detected by the array sensor, and determines, among the directions, a direction in which the sound pressure has become maximum as a direction of arrival of the sound wave.
[12] The device for determining sound source direction according to [11] described above, further including a camera mounted on the aerial vehicle, wherein the computing unit creates a map of sound pressure based on a captured image captured by the camera and the sound pressure in each of the directions, and creates an image in which the map of sound pressure and the captured image are superimposed.
[13] A method for determining sound source direction including: using the device for determining sound source direction according to [12] described above, generating a superimposed image in which the map of sound pressure is superimposed on the captured image, and determining a direction of arrival of the sound wave based on the superimposed image.
[14] A method for determining sound source direction including: calculating a sound pressure in each of directions of arrival of the sound wave based on the sound wave detected by the sound wave receiving device according to any one of [1] to [10] described above, and determining, among the directions, a direction in which the sound pressure has become maximum as a direction of arrival of the sound wave.
[15] A sound wave receiving device including: an aerial vehicle having a rotor blade; an array sensor mounted on the aerial vehicle and including a plurality of microphones; and a second shielding member provided along a peripheral portion of the array sensor, and suppressing reception of external sound from outside a reception range set in advance for a sound wave received by the array sensor, wherein the array sensor is disposed outside an angle range of 50° or more and 90° or less below with respect to a reference plane (0°) including the rotor blade.
[16] A device for determining sound source direction including: the sound wave receiving device according to [15] described above; and a computing unit that calculates a sound pressure in each of directions of arrival of the sound wave based on the sound wave detected by the array sensor, and determines, among the directions, a direction in which the sound pressure has become maximum as a direction of arrival of the sound wave.
[17] The device for determining sound source direction according to [16] described above, further comprising a camera mounted on the aerial vehicle, wherein the computing unit creates a map of sound pressure based on a captured image captured by the camera and the sound pressure of the sound wave, and creates an image in which the map of sound pressure and the captured image are superimposed.
[18] A method for determining sound source direction including: using the device for determining sound source direction according to [17] described above, generating a superimposed image in which the map of sound pressure is superimposed on the captured image, and determining a direction of arrival of the sound wave based on the superimposed image.
[19] A method for determining sound source direction including: calculating a sound pressure in each of directions of arrival of the sound wave based on the sound wave detected by the sound wave receiving device according to [15] described above, and determining, among the directions, a direction in which the sound pressure has become maximum as a direction of arrival of the sound wave.

### Advantageous Effects of Invention

According to the present invention, when determining the direction of arrival of sound waves, with the use of the first shielding member and the second shielding member, the influence of sound wave noise due to the rotor blades and, in terms of the design of the sound wave receiving device or the device for determining sound source direction, external sounds arriving from outside the specified sound wave reception range (for example, sounds which are reflections of the rotor blade sound generated by the rotor blades on surrounding structures) can be suppressed. Specifically, with the use of the first shielding member and the second shielding member, sound field disturbances in the propagation path of sound waves of the sound source within the sound wave reception range can be reduced, and sound wave noise caused by the rotor blades and external sounds which are reflection sounds of the rotor blade sound can be prevented or suppressed from entering each microphone of the array sensor. Accordingly, even when the array sensor is mounted on the aerial vehicle having the rotor blades, it becomes difficult to be influenced by the rotor blade sound. Therefore, the reception of sound waves by the array sensor becomes good, and the accuracy of determining the direction of arrival of the sound waves, that is, the accuracy of determining the direction of the sound source, can be improved.

### Brief Description of Drawings

[Fig. 1] Fig. 1 is a schematic diagram illustrating an example of a device for determining sound source direction according to an embodiment of the present invention.
[Fig. 2] Fig. 2 includes schematic diagrams each illustrating an example of a navigation path of a sound wave receiving device.
[Fig. 3] Fig. 3 includes graphs illustrating examples of frequency characteristics of leak sound for various leak hole diameters and piping pressures.
[Fig. 4] Fig. 4 is a functional block diagram illustrating an example of the device for determining sound source direction.
[Fig. 5] Fig. 5 is a graph illustrating an example of the frequency spectrum of sound waves emitted by rotor blades of an aerial vehicle and collision-preventing sound waves.
[Fig. 6] Fig. 6 is a schematic diagram illustrating the directivity of rotor blade sound of the aerial vehicle.
[Fig. 7] Fig. 7 is a schematic diagram illustrating the directivity of the rotor blade sound of the aerial vehicle, and a sound wave propagation space.
[Fig. 8] Fig. 8 includes schematic diagrams illustrating an example of the shapes of various rotor blade sound shielding members.
[Fig. 9] Fig. 9 is a schematic diagram illustrating an example of a top surface of the aerial vehicle.
[Fig. 10] Fig. 10 is a schematic diagram illustrating another example of the rotor blade sound shielding member and an external sound shielding member.
[Fig. 11] Fig. 11 is a diagram schematically illustrating the relationship between a sound wave reception range angle and an observation depression angle in the case of performing the observation in a depression angle direction using an array sensor of the present invention.
[Fig. 12] Fig. 12 is a schematic diagram illustrating another example of the sound wave receiving device of the present invention.
[Fig. 13] Fig. 13 is a schematic diagram illustrating yet another example of the sound wave receiving device of the present invention.
[Fig. 14] Fig. 14 is an arrow view of A illustrated in Fig. 13.

### Description of Embodiments

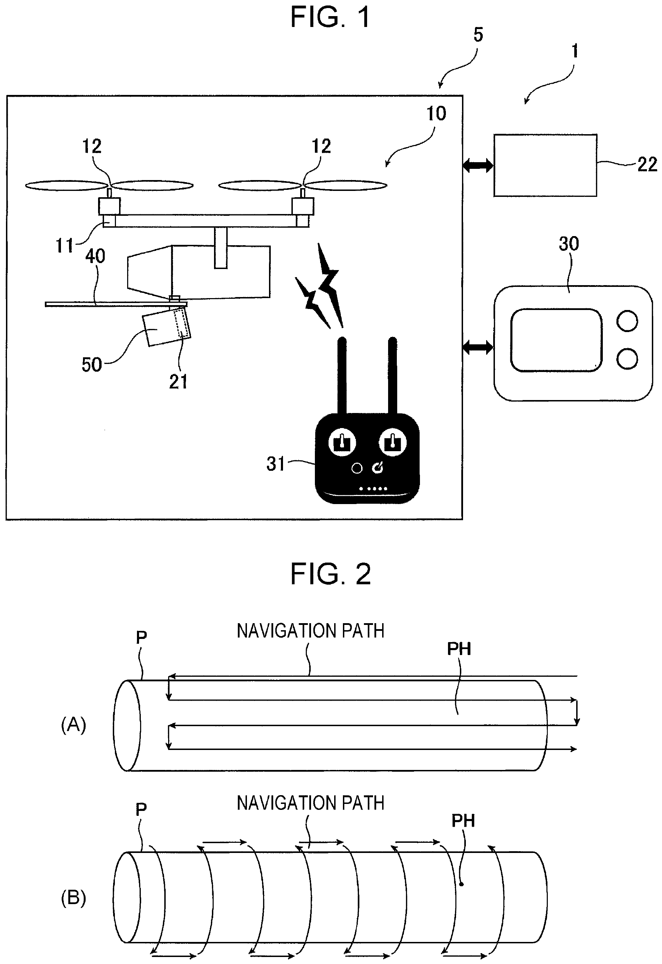

An embodiment of the present invention will be described based on the drawings. Fig. 1 is a schematic diagram illustrating an example of a device for determining sound source direction according to the embodiment of the present invention. A device for determining sound source direction 1 includes a sound wave receiving device 5, a computing unit 22, and a control unit 30. The sound wave receiving device 5 includes an aerial vehicle 10, an array sensor 21 mounted on the aerial vehicle 10, a rotor blade sound shielding member 40, an external sound shielding member 50, and a flight control unit 31 controlling the operation of the aerial vehicle 10. Note that in Fig. 1, the sound wave receiving device 5 is enclosed in a thin solid line.

The aerial vehicle 10 has the same or similar configuration to, for example, a conventionally known multicopter, and includes a frame 11 and a plurality of rotor blades 12 attached to the frame 11. The rotor blades 12 are connected to a motor which is not illustrated. Also, it is configured for the flight operation of the aerial vehicle 10 to be controlled by the flight control unit 31, and, in the example illustrated in Fig. 1, it is configured for the flight control unit 31 to be operated by an operator. Therefore, when the operator operates the flight control unit 31, power is supplied to the motor from a power source such as a battery, not illustrated, in the aerial vehicle 10 to change the rotational speed of the motor. In this way, the rotational speed of the plurality of rotor blades 12 is controlled to enable the aerial vehicle 10 to fly a certain navigation path intended or set in advance by the operator. Note that the aerial vehicle 10 may be configured to obtain lift and propulsion by the rotor blades 12, or may be configured to obtain lift through a balloon or the like and obtain propulsion through the rotor blades 12.

The aerial vehicle 10, in the example discussed here, is configured such that its flight operations are controlled by the operator operating the flight control unit 31, but may instead be configured to fly autonomously using the self-localization (simultaneous localization and mapping (SLAM)) technology. In the case of allowing the aerial vehicle 10 to fly autonomously, the aerial vehicle 10 obtains, for example, position information obtained from a non-illustrated GPS [Global Positioning System] receiving unit, or position information, obtained from a non-illustrated total station, from a reference point where the total station is installed. Alternatively, the aerial vehicle 10 obtains various types of information such as images captured by a camera and/or the distance and direction with a target object obtained using LiDAR [light detection and ranging] (each not illustrated). Then, based on the obtained information, pre-stored map information, etc., the aerial vehicle 10 may be configured to estimate the current flying position and autonomously fly a certain path. The GPS receiving unit, camera, LiDAR, etc. described above may be provided in the aerial vehicle 10, or may be configured as separate pieces from the aerial vehicle 10. In short, the aerial vehicle 10 may be configured to be able to control flight operations based on the obtained position information of the aerial vehicle 10.

Fig. 2 includes schematic diagrams each illustrating an example of the navigation path of the aerial vehicle 10. Specifically, the examples illustrated in Fig. 2 are examples of the navigation path of the aerial vehicle 10 in the case of inspecting whether a gas leak is occurring from a pinhole-shaped leak hole (sound source) PH formed in piping P using the device for determining sound source direction 1 in Fig. 1. For example, in the example illustrated in Fig. 2(A), the aerial vehicle 10 is moved by a predetermined length along the piping P on one side in the longitudinal direction of the piping P. Thereafter, while maintaining the position in the longitudinal direction, the aerial vehicle 10 is moved towards one side in a direction orthogonal to the longitudinal direction (in Fig. 2(A), downward in the vertical direction in Fig. 2). That is, if the piping P is disposed to extend in the horizontal direction, the aerial vehicle 10 is moved by a predetermined length in the horizontal direction, and then moved towards one side in the vertical direction. Note that, if the piping P is disposed to extend in the vertical direction, the aerial vehicle 10 is moved by a predetermined length in the vertical direction, and then moved towards one side in the horizontal direction. The moving length of the aerial vehicle 10 in a direction orthogonal to the longitudinal direction is set shorter than the moving length along the longitudinal direction of the piping P in the example illustrated in Fig. 2(A). Thereafter, the aerial vehicle 10 is moved by a predetermined length along the piping P on the other side in the longitudinal direction, and then moved again towards one side in a direction orthogonal to the longitudinal direction. By repeating such movement, the aerial vehicle 10 flies in the navigation path or trajectory illustrated in Fig. 2(A), and leak inspection is performed throughout the piping P.

Also, in the example illustrated in Fig. 2(B), the aerial vehicle 10 is moved by a predetermined length along the outer peripheral surface of the piping P on one side in the circumferential direction of the piping P, and then moved along the piping P on one side in the longitudinal direction. The moving length of the aerial vehicle 10 along the circumferential direction of the piping P may be about half the entire circumference of the piping P. Also, the moving length along the longitudinal direction is set shorter than the moving length along the circumferential direction in the example illustrated in Fig. 2(B). The aerial vehicle 10 is then moved by a predetermined length along the outer peripheral surface of the piping P on the other side in the circumferential direction, and then moved along the piping P on one side in the longitudinal direction. By repeating such movement, the aerial vehicle 10 flies in the navigation path illustrated in Fig. 2(B), and leak inspection is performed throughout the piping P. Note that leaks may be inspected throughout the entire piping P by the aerial vehicle 10 flying in a longitudinally reciprocating navigation path while moving in the vertical direction in Fig. 2. That is, the navigation path of the aerial vehicle 10 may be zigzag.

If a gas leak is occurring from the leak hole PH, a leak sound is generated there. The sound wave receiving device 5 detects the leak by receiving the leak sound, and the direction of the sound source, that is, the leakage location, is determined by the device for determining sound source direction 1. At this time, the position of the leak hole PH can be identified based on the flight position of the sound wave receiving device 5 and the determined direction of the sound source with respect to the sound wave receiving device 5. Note that the navigation path of the aerial vehicle 10 may be either the navigation path illustrated in Fig. 2(A) or the navigation path illustrated in Fig. 2(B). If the aerial vehicle 10 repeats ascending and descending many times, the battery power consumption may increase compared to a case in which the number of repetitions of ascending and descending is small. Likewise, if the moving length of the aerial vehicle 10 in the vertical direction is long, the power consumption may increase. Therefore, in terms of suppressing the power consumption caused by allowing the aerial vehicle 10 to fly, it is preferable to set, as the navigation path of the aerial vehicle 10, a navigation path in which the number of repetitions of ascending and descending is small, and the length of movement in the vertical direction is short.

The sound wave receiving device 5 in Fig. 1 is configured to receive sound waves generated from a sound source, and includes, for example, the array sensor 21 mounted on the lower side of the aerial vehicle 10. The array sensor 21 includes a plurality of microphones 21a, each microphone 21a measuring the sound pressure of sound waves within the range of 90 kHz from audible sound, each detecting sound waves emitted from the sound source, and outputting sound pressure information (signal) according to the detected sound pressure. In the embodiment of the present invention, the array sensor 21 is disposed below the rotor blades 12. Therefore, the array sensor 21 will perform the observation of sound waves in a depression angle direction with respect to a plane including the rotor blades 12 as a reference plane. Note that the array sensor 21 may be disposed above the rotor blades 12. In this case, the array sensor 21 will perform the observation in an elevation angle direction with respect to a plane including the rotor blades 12 as a reference plane.

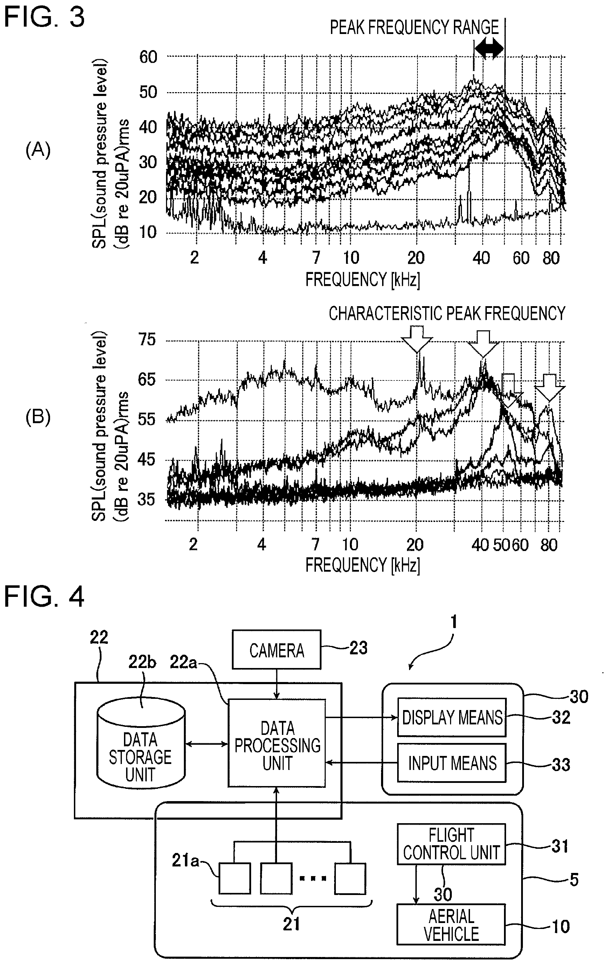

The sound quality, i.e., magnitude and frequency, of the leak sound when a gas leak occurs from the leak hole PH differs depending on the gas passage speed determined by the diameter of the leak hole and the piping pressure. Fig. 3 includes graphs illustrating examples of frequency characteristics of leak sound for various leak hole diameters and piping pressures. Fig. 3(A) is a graph illustrating the frequency spectrum of the leak sound when the leak hole diameter ϕ is 0.6 mm, and the piping pressure is varied in the range of 0 kPa or more and 100 kPa or less. The frequency spectrum is obtained, for example, by performing a Fast Fourier Transform (FFT) of the sound pressure waveform of the leak sound received by a wideband microphone. Fig. 3(B) is a graph illustrating the frequency spectrum of the leak sound when the piping pressure is 5 kPa, and the leak hole diameter ϕ is varied in the range of 0.2 mm or more and 3.0 mm or less. When the leak hole diameter and the piping pressure are varied as illustrated in Figs. 3(A) and 3(B), although the frequency characteristics of the sound waves (the peak position of the sound pressure) are different, the sound pressure peak is present in the range of 20 kHz or more and 90 kHz or less. Thus, when inspecting the leak hole PH, it is preferable that the microphones 21a have a sensitivity in the range of 20 kHz or more and 90 kHz or less in which the sound pressure peak is present.

Fig. 4 is a functional block diagram illustrating an example of the device for determining sound source direction 1. The device for determining sound source direction 1 in Fig. 4 includes the sound wave receiving device 5, the computing unit 22, and the control unit 30. Furthermore, the computing unit 22 is configured as a separate piece from the sound wave receiving device 5 in the embodiment of the present invention. The computing unit 22 includes a data processing unit 22a, which determines the direction of a sound source based on sound pressure information output from the array sensor 21, and a data storage unit 22b, which stores various types of data. Note that the data processing unit 22a is composed of hardware resources such as a CPU, and uses programs and data stored in the data storage unit 22b to control the operation of the device for determining sound source direction 1 and execute operations. The data storage unit 22b is an information recording medium such as a re-recordable flash memory, a hard disk which is built-in or connected via a data communication terminal, a memory card, etc., and a read/write device thereof. Programs for realizing various functions, and information used during the execution of the programs are stored in advance in the data storage unit 22b.

Based on a plurality of items of sound pressure information measured by the array sensor 21, the data processing unit 22a obtains a map of sound pressure indicating a sound pressure distribution for each assumed direction of arrival of sound waves using delay-and-sum beamforming. Delay-and-sum beamforming is a calculation method that calculates a sound pressure distribution for each assumed direction of arrival, i.e., a map of sound pressure, by correcting and adding phase differences of sound waves measured by a plurality of microphones for each assumed direction of arrival. The direction in which the sound pressure in the map of sound pressure calculated using delay-and-sum beamforming becomes maximum is the direction of arrival of the sound waves, that is, the sound source position. Note that the data processing unit 22a may apply a frequency filter in a required frequency range (such as a band-pass filter of 55 kHz ± 5 kHz) to the sound pressure information measured by the array sensor 21, and then obtain a map of sound pressure.

The device for determining sound source direction 1 may further include a camera 23. The camera 23 captures an image of an object to be inspected, such as the piping P, and outputs the obtained captured image to the data processing unit 22a. The camera 23 may be, for example, a digital camera including an image sensor such as a CCD sensor or a CMOS sensor, and a lens. The magnification, field of view, etc. of the camera 23 are appropriately adjusted according to the desired sound wave reception range. The data processing unit 22a divides the desired sound wave reception range according to the field of view of the camera 23 into a predetermined number of direction divisions, and performs a delay-and-sum beamforming calculation to obtain a map of sound pressure. Note that the camera 23 may be mounted on the aerial vehicle 10. Alternatively, the camera 23 may be configured as a separate piece from the device for determining sound source direction 1 or the aerial vehicle 10. In any case, it is only necessary for the image data captured by the camera 23 to be configured to be input to the data processing unit 22a.

The data processing unit 22a has the function of creating a superimposed image in which the map of sound pressure corresponding to the image capturing area of the camera 23 is superimposed on the captured image. The data processing unit 22a creates a superimposed image by, for example, making the map of sound pressure into a semitransparent image and superimposing it on the captured image. As the map of sound pressure used for the superimposed image, a color image with continuously different colors according to sound pressure intensities may be used. Since the object and the sound pressure intensities are superimposed and displayed in the superimposed image, the corresponding relationship between the position of the object in the captured image and the sound pressure distribution of the sound waves can be determined at a glance by a user checking the superimposed image. The data processing unit 22a outputs the created superimposed image to the control unit 30 provided on the ground, for example, through wireless transfer.

Although the case in which the computing unit 22 is configured as a separate piece from the sound wave receiving device 5, that is, provided on the ground side, is illustrated in the embodiment of the present invention, instead of such a configuration, the computing unit 22 may be mounted on the aerial vehicle 10. In short, it is only necessary for the sound pressure information and the captured image obtained by the sound wave receiving device 5 to be configured to be transmitted to the computing unit 22. It is only necessary for the computation results at the computing unit 22 to be configured to be transferred to the control unit 30, for example, via wired or wireless communication. Then, a map of sound pressure and a superimposed image are created on the control unit 30 side.

The control unit 30 includes, for example, display means 32, which displays the superimposed image created by the computing unit 22, and input means 33 of the device for determining sound source direction 1.

The display means 32 may be, for example, a liquid crystal display (LCD), and the display means 32 displays the superimposed image created by the data processing unit 22a. The input means 33 may be, for example, push switches which are plurally provided near the display means 32. When the operator presses the input means, a certain input signal is input to the computing means. Touchscreen-type input means 33 may be used instead of or in conjunction with the push switches. In short, it is only necessary for the input means 33 to be configured to be able to input various types of information. Then, when an instruction to save an image displayed on the display means 32 is input by the input means 33, the data processing unit 22a stores or saves the captured image and the superimposed image in the data storage unit 22b. In addition, personal computers (PCs), smartphones, tablet-type terminals, etc. may be used as the display means 32 and the input means 33. Furthermore, if it is not required to display the sound pressure information in real time during the flight of the aerial vehicle 10, the display means 32 need not be provided.

Although the example in which the device for determining sound source direction 1 includes the camera 23, and the display means 32 is provided in the control unit 30 has been discussed in the above-described embodiment, this is not the only possible case. For example, if the device for determining sound source direction 1 is a device that only determines the direction of arrival of sound waves, the device for determining sound source direction 1 need not include the camera 23, and the control unit 30 need not include the display means 32. In this case, the data processing unit 22a of the device for determining sound source direction 1 performs a delay-and-sum beamforming calculation on the sound pressure information measured by the array sensor 21 to calculate a map of sound pressure within a sound wave reception range which is arbitrarily set as necessary, and determines a direction in which the sound pressure becomes maximum as a direction of arrival of the sound waves.

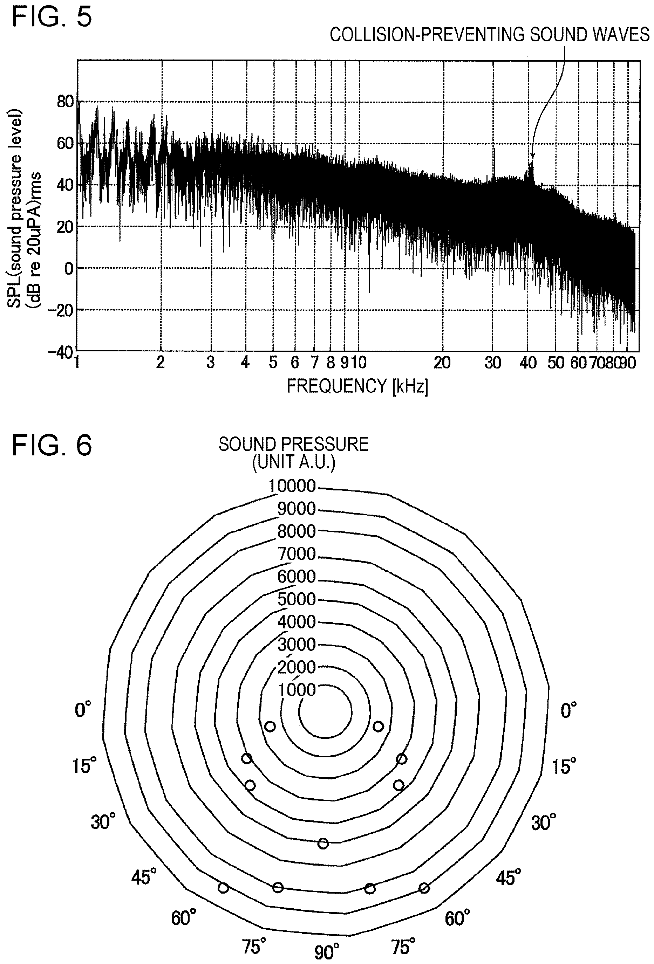

Sound waves detected by the array sensor 21 in the embodiment of the present invention will now be described. During flight of the aerial vehicle 10, sound waves are generated from the rotor blades 12. Additionally, depending on the model, sound waves are also used for detecting the approach of the aerial vehicle 10 to obstacles and for measuring the flight altitude. Fig. 5 is a graph illustrating an example of sound waves emitted by the rotor blades 12 of the aerial vehicle 10, which is superimposed with an example of sound waves for detection of the approach to obstacles and measurement of the flight altitude. As illustrated in Fig. 5, sound waves emitted by the rotor blades 12 have frequency characteristics that the sound pressure decreases as the frequency increases. Sound waves for detection of the approach to obstacles and measurement of the flight altitude have a sound pressure peak around 40 kHz in the example illustrated here. Therefore, sound waves for detection of the approach to obstacles and measurement of the flight altitude may also be a noise source when the array sensor 21 detects and determines the direction of sound waves emitted from the sound source. The ratio of the sound waves to be measured or searched by the array sensor 21, the sound wave noise emitted by the sound wave receiving device 5, namely the collision-preventing sound waves used for detection of the approach to obstacles and measurement of the flight altitude, and the rotor blade sound is different for each measurement frequency, depending on factors such as the leak hole diameter, piping pressure, and frequency of the flight control sound waves. Therefore, the influence of the above-described sound wave noise may be reduced by performing appropriate adjustments accordingly, such as determining the direction of the sound source for a plurality of measurement frequency bands of the sound pressure information.

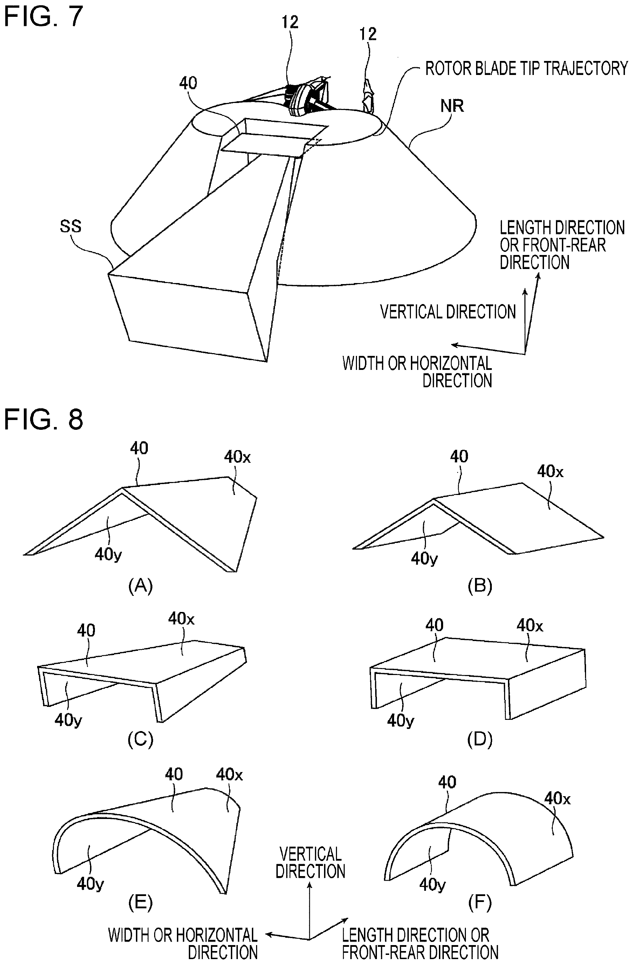

The rotor blade sound of the sound wave receiving device 5 is directional. Fig. 6 is a schematic diagram illustrating the sound pressure of the rotor blade sound every 15 degrees, and Fig. 7 is a schematic diagram illustrating a region in which the rotor blade sound at the sound wave receiving device 5 is strong. In Fig. 7, when a plane including the rotor blades 12 is regarded as a reference plane, the reference plane being horizontal (0°) and the sound wave receiving device 5 serving as the center on the reference plane, a range of about 50° or more and 90° or less below the reference plane is a strong sound wave noise range NR influenced by the rotor blade sound. Although only the lower part is illustrated in the schematic diagram in Fig. 7, the strong sound wave noise range NR in the upper part also has the same or similar angle range. During the time it takes for the leak sound present within the sound wave reception range angle of the sound wave receiving device 5 to reach the array sensor 21, if the leak sound passes through the strong sound wave noise range NR, there is a possibility of adverse effects on the sound pressure signal (phase information) of the leak sound due to disturbances in the sound field in the air within the strong sound wave noise range NR. In that case, this will lead to deterioration of the direction determining accuracy.

Accordingly, by providing the rotor blade sound shielding member 40 between the rotor blades 12 and the array sensor 21 in the sound wave receiving device 5 in Fig. 1, the rotor blade sound is prevented or suppressed from intruding the sound wave path from the sound source to the array sensor 21. Specifically, as illustrated in Fig. 7, the rotor blade sound shielding member 40 is installed between the rotor blades 12 and the array sensor 21 in the vertical direction. In terms of the design of the sound wave receiving device 5, the rotor blade sound shielding member 40 blocks the rotor blade sound from entering a sound wave propagation space SS consisting of a sound wave path between a sound source facing from a predetermined sound wave reception range and the array sensor 21. This prevents disturbances in the sound field caused by the rotor blade sound intruding the sound wave propagation space SS, and makes it possible to accurately determine the sound source direction. Note that the above-described rotor blade sound shielding member 40 corresponds to a first shielding member in an embodiment of the present invention.

The shape of the rotor blade sound shielding member 40 may be a flat plate shape, for example, as illustrated in Figs. 1 and 7. Figs. 8(A) to (F) are schematic diagrams illustrating other examples of the shapes of various rotor blade sound shielding members 40. As illustrated in Figs. 8(A) to (D), the shape of the rotor blade sound shielding member 40 may be a partial polygonal cylinder or a partial polygonal frustum shell. Alternatively, as illustrated in Fig. 8(E) and Fig. 8(F), the shape of the rotor blade sound shielding member 40 may be an arc shape, a partial circular truncated cone shell, a partial elliptical cylinder shell, or a partial elliptical truncated cone shell. In short, it is only necessary for the rotor blade sound shielding member 40 to be configured to cover the rotor blades 12 side in the array sensor 21. Specifically, in the embodiment of the present invention, the array sensor 21 is disposed in the central portion in the width direction of the rotor blade sound shielding member 40, and both ends of the rotor blade sound shielding member 40 in the width direction are positioned below the central portion of the array sensor 21 in the vertical direction. In this way, the influence of the diffraction of the rotor blade sound on the array sensor 21 can be suppressed. Note that, if the rotor blade sound shielding member 40 has a shape where the entire circumference of the sound wave propagation space SS is covered, such as a cylinder, a circular truncated cone shell, an elliptical cylinder shell, an elliptical truncated cone shell, a polygonal cylinder, a polygonal frustum shell, etc., depending on the shape, sound waves other than those in the front direction may be attenuated by multiple reflections within the shielding member. Therefore, misjudgment of the direction may occur in the co-axial direction of the rotor blade sound shielding member 40. To prevent the occurrence of direction misjudgment, it is preferable that all the microphones 21a of the array sensor 21 be shaped not to block sound waves arriving from a range excluding the 10° circumference in the sound wave propagation space SS of the sound wave receiving device 5.

The rotor blade sound shielding member 40 is made from, for example, a sound-insulating material having sound-insulating properties or a sound-absorbing material having sound-absorbing properties, or a combination thereof. The sound-insulating material is made of, for example, resin or metal, while the sound-absorbing material is made of soft urethane, polystyrene foam, melamine foam, rubber sponge, fiber-based glass wool, or white wool. In particular, it is preferable that the rotor blade sound shielding member 40 use the sound-insulating material on one side 40x facing the rotor blades, and use the sound-absorbing material on the other side 40y facing the path of the leak sound in order to prevent the occurrence of direction misjudgment due to sound reflection. Note that the sound-absorbing material in the above-described rotor blade sound shielding member 40 corresponds to a first sound-absorbing material in an embodiment of the present invention, and the sound-insulating material in the rotor blade sound shielding member 40 corresponds to a first sound-insulating material in an embodiment of the present invention.

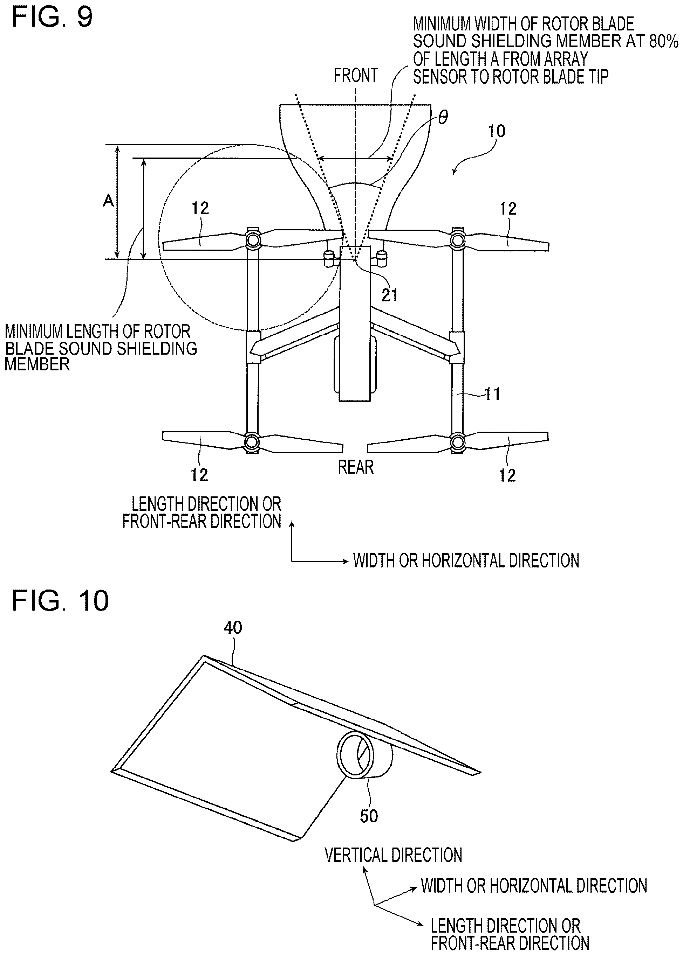

Fig. 9 is a schematic diagram illustrating an example of a top surface of the aerial vehicle. To reduce the intersection space between the strong sound wave noise range NR and the sound wave propagation space SS, it is preferable to dispose the array sensor 21 between any rotor blades and observe the direction between the rotor blades. Also, for the purpose of preventing the rotor blade sound from intruding the sound wave propagation space SS, that is, preventing the sound wave propagation space SS and the strong sound wave noise range NR from intersecting with each other, it is preferable that the length of the rotor blade sound shielding member 40 cover the entire length from the array sensor 21 to the tip of the rotor blades 12 with respect to the observation direction of the sound wave receiving device 5. However, if the sound wave propagation space SS and the strong sound wave noise range NR intersect with each other even a little, the direction determining accuracy gradually deteriorates as the intersecting region increases, rather than the direction determining accuracy deteriorating suddenly. Therefore, the length of the rotor blade sound shielding member 40 is preferably 80% or more of a length A [mm] from the array sensor 21 to the tip of the rotor blades 12 in the direction of the sound wave reception range of the sound wave receiving device 5. In addition, when the horizontal sound wave reception range angle (°) of the sound wave receiving device 5 is θ, for the same reason as the length of the rotor blade sound shielding member 40, the width of the rotor blade sound shielding member 40 at 80% of the length A [mm] in the direction of the sound wave reception range of the sound wave receiving device 5 is preferably 2 × (0.8 × A) × tan(θ/2) or more. Note that "the horizontal sound wave reception range angle θ (°) of the sound wave receiving device 5" is the angle of the sound wave reception range in the horizontal direction defined by design.

Furthermore, the sound wave receiving device 5 is provided with the external sound shielding member 50 at the peripheral portion of the array sensor 21 for blocking sound waves, i.e., external sounds, reaching the array sensor 21 from outside the sound wave reception range angle, such as reflections of the rotor blade sound on the surrounding structures of the aerial vehicle 10. The external sound shielding member 50, like the rotor blade sound shielding member 40, is made from a sound-insulating material or a sound-absorbing material, or a combination thereof. The external sound shielding member 50 has a shape such as a full cylinder, a full circular truncated cone shell, a full elliptical cylinder shell, a full elliptical truncated cone shell, a full polygonal cylinder, a full polygonal frustum shell, and the like. Note that the above-described external sound shielding member 50 corresponds to a second shielding member in an embodiment of the present invention. In addition, the sound-absorbing material in the above-described external sound shielding member 50 corresponds to a second sound-absorbing material in an embodiment of the present invention, and the sound-insulating material in the external sound shielding member 50 corresponds to a second sound-insulating material in an embodiment of the present invention.

To prevent the occurrence of direction misjudgment, it is also preferable for the external sound shielding member 50 that all the microphones 21a constituting the array sensor 21 be shaped not to block sound waves arriving from a range excluding the 10° circumference in the sound wave reception range angle of the sound wave receiving device 5. Fig. 10 is a schematic diagram illustrating another example of the rotor blade sound shielding member 40 and the external sound shielding member 50. As illustrated in Fig. 10, the rotor blade sound shielding member 40 and the external sound shielding member 50 may be integrally configured.

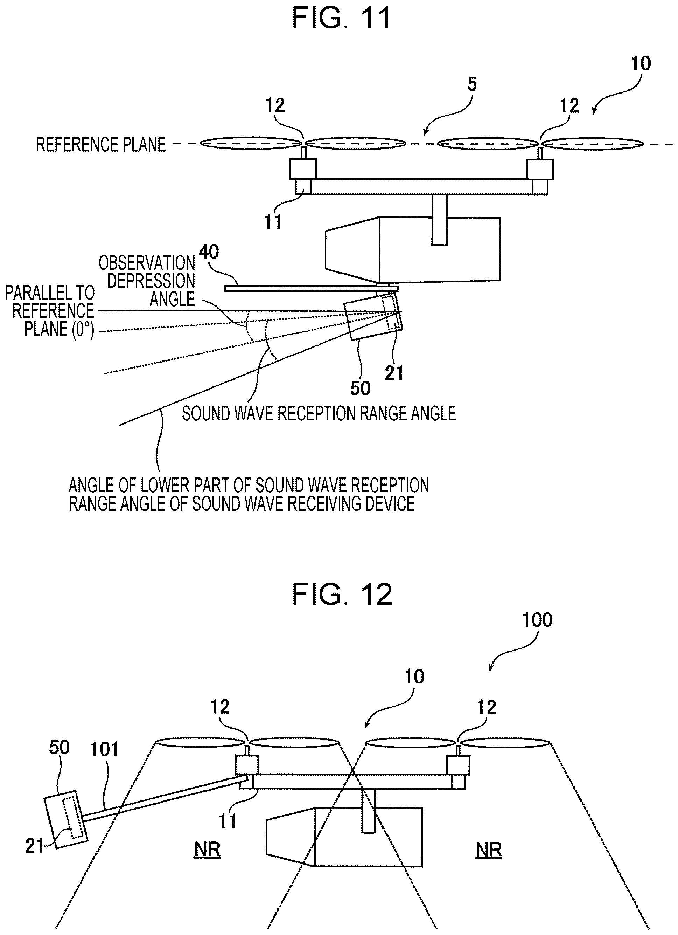

When the array sensor 21 is to perform the observation in a depression angle direction, it is preferable that the path until the to-be-measured sound wave reach the array sensor 21 (the sound wave propagation space SS) and the strong sound wave noise range NR not intersect with each other as much as possible. Fig. 11 illustrates such an example. Specifically, it is preferable that the angle of the lower part of the sound wave reception range angle of the sound wave receiving device 5 with respect to a plane parallel to the reference plane illustrated in Fig. 11 be 50° or less. The angle of the lower part of the sound wave reception range angle of the sound wave receiving device 5 is the angle obtained by adding the observation depression angle to half the angle of the sound wave reception range angle in the depression angle direction of the array sensor 21. Note that the same is true when the array sensor 21 is to perform the observation in an elevation angle direction, and it is preferable that the path until the leak sound within the sound wave reception range angle reach the array sensor 21 (the sound wave propagation space SS) and the region with strong rotor blade sound not intersect with each other as much as possible. Specifically, it is preferable that the angle of the upper part of the sound wave reception range angle of the sound wave receiving device 5 with respect to a plane parallel to the reference plane be 50° or less. The angle of the upper part of the sound wave reception range angle of the sound wave receiving device 5 is the angle obtained by adding the observation elevation angle to half the angle of the sound wave reception range angle in the elevation angle direction of the array sensor 21. Note that 50° refers to the angle from the reference plane to the boundary of the strong sound wave noise range NR in the depression or elevation angle direction, as described above. Depending on the distribution of the strong sound wave noise range NR of the aerial vehicle to be used, an angle other than 50° may be used.

According to the above-described embodiment, the sound field disturbance in the path of the sound wave of sound source in the sound wave reception range of the sound wave receiving device 5 can be reduced. Accordingly, even when the array sensor 21 is mounted on the aerial vehicle 10 having the rotor blades 12, it becomes difficult to be influenced by the rotor blade sound. Therefore, the reception of sound waves by the array sensor becomes good, and the accuracy of determining the direction of arrival of the sound waves, that is, the accuracy of determining the direction of the sound source, can be improved.

Note that the embodiment of the present invention is not limited to the above-described embodiment, and various changes can be added. For example, although the case where the sound source is a gas leakage source has been discussed in the above-described embodiment, the embodiment is not limited to the observation of the gas leakage source and can be applied to determining the direction of various sound sources. Also, when the array sensor 21 is physically scanned and the observation angle is changed, the rotor blade sound shielding member and the external sound shielding member may be physically scanned in the same manner as the array sensor 21.

In addition, from the directivity of the rotor blade sound of the aerial vehicle 10 illustrated in Fig. 6, the array sensor 21 may be disposed outside the angle range of 50° or more and 90 °or less (outside the range NR in Fig. 7). In this case, the rotor blade sound shielding member 40 is not necessarily required, and only the external sound shielding member 50 may be used. The sound wave receiving device 5 and a later-described sound wave receiving device 100 illustrated in Fig. 12 are also configured to observe a direction not including the strong sound wave noise range NR as a sound wave reception range at the sound wave receiving devices 5 and 100. Fig. 12 is a schematic diagram illustrating such an example. In the sound wave receiving device 100 in Fig. 12, the array sensor 21 is coupled to the aerial vehicle 10 via an arm 101. The array sensor 21 is installed outside the angle range of 50° or more and 90° or less, that is, outside the range of the strong sound wave noise range NR illustrated in Fig. 7. In this way, the array sensor 21 observes a direction opposite to the strong sound wave noise range NR, that is, outside the strong sound wave noise range NR. Note that, in this configuration, the rotor blade sound shielding member 40 is not necessarily required, but the external sound shielding member 50 is necessary. Even in this case, the influence of the rotor blade sound can be suppressed, and the direction of the sound source can be accurately determined.

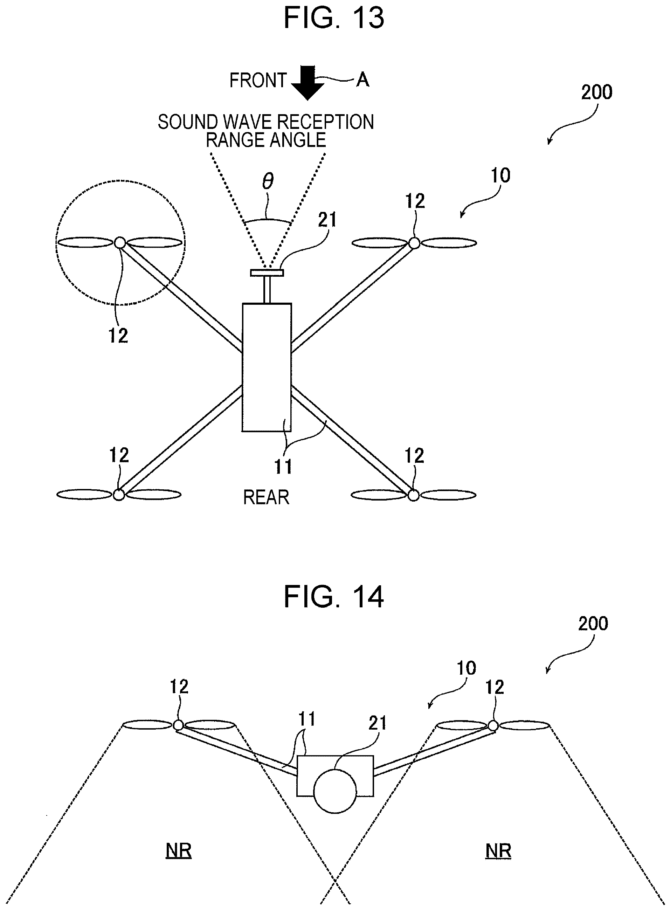

Fig. 13 is a schematic diagram illustrating yet another example of the sound wave receiving device of the present invention, and Fig. 14 is an arrow view of A illustrated in Fig. 13. An example of a sound wave receiving device 200 illustrated in Figs. 13 and 14 is an example in which the spacing between the rotor blades 12 disposed in the front part of the aerial vehicle 10 is set wider than the spacing between the rotor blades 12 disposed in the front part of the aerial vehicle 10 in the above-described embodiment. As illustrated in Figs. 13 and 14, when the aerial vehicle 10 with a wide spacing between the rotor blades 12 is used, even if the array sensor 21 is disposed at a position close to the aerial vehicle 10, the position of the array sensor 21 is outside the angle range of 50° or more and 90° or less from the directivity of the rotor blade sound (outside the strong sound wave noise range NR illustrated in Fig. 7). Even in this case, when a direction not including the strong sound wave noise range NR is observed, even if the rotor blade sound shielding member 40 is not necessarily used, with the use of only the external sound shielding member 50, the direction of the sound source can be accurately determined while suppressing the influence of the rotor blade sound.

### List of reference numerals

### Reference Signs List

- 1: device for determining sound source direction
- 5, 100, and 200: sound wave receiving devices
- 10: aerial vehicle
- 11: frame
- 12: rotor blades
- 21: array sensor
- 21a: microphones
- 22: computing unit
- 22a: data processing unit
- 22b: data storage unit
- 23: camera
- 30: control unit
- 31: flight control unit
- 32: display means
- 33: input means
- 40: rotor blade sound shielding member
- 50: external sound shielding member
- 101: arm

## Claims

1. A sound wave receiving device comprising:
an aerial vehicle having a rotor blade;
an array sensor mounted on the aerial vehicle and including a plurality of microphones;
a first shielding member installed between the rotor blade and the array sensor, and suppressing an influence of sound wave noise generated by the rotor blade on a sound wave received by the array sensor; and
a second shielding member provided along a peripheral portion of the array sensor, and suppressing reception by the array sensor of external sound from outside a sound wave reception range set in advance for the sound wave.

2. The sound wave receiving device according to Claim 1, wherein:
the first shielding member includes a first sound-absorbing material having a sound-absorbing property and a first sound-insulating material having a sound-insulating property, and
the first sound-absorbing material is disposed closer to the array sensor than the first sound-insulating material.

3. The sound wave receiving device according to Claim 1 or 2, wherein:
the second shielding member includes a second sound-absorbing material having a sound-absorbing property and a second sound-insulating material having a sound-insulating property, and
the second sound-absorbing material is disposed closer to the array sensor than the second sound-insulating material.

4. The sound wave receiving device according to any one of Claims 1 to 3, wherein the first shielding member and the second shielding member are integrally configured with each other.

5. The sound wave receiving device according to any one of Claims 1 to 4, wherein the array sensor is mounted at a same height as or below the rotor blade in a vertical direction of the aerial vehicle, and is installed so that an angle of a lower part of the sound wave reception range in a depression angle direction with respect to a reference plane including the rotor blade is 50° or less.

6. The sound wave receiving device according to any one of Claims 1 to 4, wherein the array sensor is mounted at a same height as or above the rotor blade in a vertical direction of the aerial vehicle, and is installed so that an angle of an upper part of the sound wave reception range in an elevation angle direction with respect to a reference plane including the rotor blade is 50° or less.

7. The sound wave receiving device according to any one of Claims 1 to 6, wherein the first shielding member has a length of 80% or more of a distance from the array sensor to a tip of the rotor blade.

8. The sound wave receiving device according to any one of Claims 1 to 7, wherein:
the aerial vehicle has a plurality of the rotor blades;
the array sensor is disposed between two adjacent rotor blades; and
let a maximum distance [mm] between the array sensor and a tip of the rotor blades in a direction of the sound wave reception range be A, and a horizontal sound wave reception range angle (°) of the array sensor be θ, then, a width of the first shielding member at 80% of the maximum distance A is 2 × (0.8 × A) × tan(θ/2) [mm] or more.

9. The sound wave receiving device according to any one of Claims 1 to 5, 7, and 8, wherein both ends of the first shielding member are positioned below the array sensor in a width direction of the aerial vehicle.

10. The sound wave receiving device according to any one of Claims 1 to 4 and 6 to 8, wherein both ends of the first shielding member are positioned above the array sensor in a width direction of the aerial vehicle.

11. A device for determining sound source direction comprising:
the sound wave receiving device according to any one of Claims 1 to 10; and
a computing unit that calculates a sound pressure in each of directions of arrival of the sound wave based on the sound wave detected by the array sensor, and determines, among the directions, a direction in which the sound pressure has become maximum as a direction of arrival of the sound wave.

12. The device for determining sound source direction according to Claim 11, further comprising:
a camera mounted on the aerial vehicle,
wherein the computing unit creates a map of sound pressure based on a captured image captured by the camera and the sound pressure in each of the directions, and creates an image in which the map of sound pressure and the captured image are superimposed.

13. A method for determining sound source direction comprising: using the device for determining sound source direction according to Claim 12, generating a superimposed image in which the map of sound pressure is superimposed on the captured image, and determining a direction of arrival of the sound wave based on the superimposed image.

14. A method for determining sound source direction comprising: calculating a sound pressure in each of directions of arrival of the sound wave based on the sound wave detected by the sound wave receiving device according to any one of Claims 1 to 10, and determining, among the directions, a direction in which the sound pressure has become maximum as a direction of arrival of the sound wave.

15. A sound wave receiving device comprising:
an aerial vehicle having a rotor blade;
an array sensor mounted on the aerial vehicle and including a plurality of microphones; and
a second shielding member provided along a peripheral portion of the array sensor, and suppressing reception of external sound from outside a reception range set in advance for a sound wave received by the array sensor,
wherein the array sensor is disposed outside an angle range of 50° or more and 90° or less below with respect to a reference plane (0°) including the rotor blade.

16. A device for determining sound source direction comprising:
the sound wave receiving device according to Claim 15; and
a computing unit that calculates a sound pressure in each of directions of arrival of the sound wave based on the sound wave detected by the array sensor, and determines, among the directions, a direction in which the sound pressure has become maximum as a direction of arrival of the sound wave.

17. The device for determining sound source direction according to Claim 16, further comprising:
a camera mounted on the aerial vehicle,
wherein the computing unit creates a map of sound pressure based on a captured image captured by the camera and the sound pressure of the sound wave, and creates an image in which the map of sound pressure and the captured image are superimposed.

18. A method for determining sound source direction comprising: using the device for determining sound source direction according to Claim 17, generating a superimposed image in which the map of sound pressure is superimposed on the captured image, and determining a direction of arrival of the sound wave based on the superimposed image.

19. A method for determining sound source direction comprising: calculating a sound pressure in each of directions of arrival of the sound wave based on the sound wave detected by the sound wave receiving device according to Claim 15, and determining, among the directions, a direction in which the sound pressure has become maximum as a direction of arrival of the sound wave.
